# EUROPÄISCHE PATENTSCHRIFT

(11) **EP 0 294 616 B1**
(45) Veröffentlichungstag und Bekanntmachung des Hinweises auf die Patenterteilung: **21.07.1993**
(21) Anmeldenummer: 88107790.3
(22) Anmeldetag: 14.05.1988
(51) Int. Cl.: B28B 1/52, B27N 3/14, B65G 47/16

(54) **Verfahren zur kontinuierlichen Bildung einer gleichförmigen Schicht von Streugut sowie Vorrichtung zur Durchführung des Verfahrens**
Process for continuously forming a uniform layer of loose material, and device for performing the process
Procédé de déposition continue d'une couche uniforme d'un matériau à disperser ainsi que machine pour exécuter ce procédé

(30) Priorität: 06.06.1987 DE 3719129
(43) Veröffentlichungstag der Anmeldung: 14.12.1988
(73) Patentinhaber: BABCOCK-BSH AKTIENGESELLSCHAFT vormals Büttner-Schilde-Haas AG, 47811 Krefeld (DE)
(72) Erfinder:
(74) Vertreter: Frese-Göddeke, Beate, Dr.

(56) Entgegenhaltungen:
- DE-B- 1 104 678
- DE-B- 1 230 203
- DE-C- 952 565
- US-A- 2 518 744

## Beschreibung

Die Erfindung betrifft ein Verfahren zur kontinuierlichen Bildung einer gleichförmigen Schicht von Streugut nach dem Oberbegriff des Anspruches 1 sowie eine Vorrichtung zur Durchführung des Verfahrens nach dem Oberbegriff des Anspruches 7.

Aus den DE-OSen 34 04 658 und 34 39 493 ist bekannt, die einzelnen Komponenten eines Streuguts volumetrisch und/oder gewichtsdosiert einem kontinuierlichen Mischer aufzugeben, aus dem das durchmischte Streugut in einem Massestrom konstant abgezogen wird. Bevor dieser Massestrom an Streugut einer Streuvorrichtung zur gleichmäßigen Ablage als Streugutschicht (Matte) auf ein kontinuierlich umlaufendes Formband zur Fertigung von Platten aufgegeben wird, wird er zur Vergleichmäßigung in einem Zwischenbunker abgeworfen. Aus diesem Bunker wird das Streugut über ein vorzugsweise nach dem Massestrom geregeltes Transportband abgezogen, an dessen Ende eine oder mehrere Egalisierwalzen angeordnet sind. Diese Egalisierwalzen kämmen das überstehende Gut des Massestroms gegen die Laufrichtung des Transportbandes zurück; der so querschnittsgeregelte Massestrom wird der Streuvorrichtung zugeführt.

Die kontinuierliche Bildung von gleichmäßigen Schichten aus Streugut nach dem vorstehend beschriebenen bekannten Verfahren haben sich bei Holzspanplatten, Mineralfaserplatten aber auch bei Holzzementplatten, Gipsspanplatten, Gipsfaserplatten als zweckmäßig erwiesen. Die Vergleichmäßigung des Massestroms über einen Zwischenbunker ist bei kompressiblen Streugut jedoch nur dann zufriedenstellend, wenn bei gleichem Abzugsquerschnitt auch die Schütthöhe im Zwischenbunker weitgehend konstant gehalten wird.

Aber auch bei weitgehend gleichmäßigem Abzug von Streugut aus einem Zwischenbunker treten durch die das Streugut rückstreifende Egalisierwalzen bei Streugut mit breiter Teilchengröße unerwünschte Klassiereffekte auf.

Die Vergleichmäßigung eines Massestroms mittels Zwischenbunker ist bei Streugut mit schnell härtenden Bindemitteln - z.B. feuchter, beschleunigter Gips - äußerst problematisch. Gerade das schnell Reagieren des Gipses ist aber vorteilhaft bei einem kontinuierlichen, raschen Herstellungsprozeß ohne lange Reifezeiten der Endprodukte (Platten). Dabei ist die leichte Formbarkeit von Streugutmischungen mit Gips nur gewährleistet, wenn der Abbindeprozeß beim Form- bzw. Verdichtungsvorgang noch nicht begonnen hat. Dieses äußerst strenge und zeitgenaue Kriterium setzt aber eine genau vorbestimmbare Verarbeitungszeit des Streugutes vom Anfeuchten bis hin zum Verdichten nach der Streuvorrichtung voraus; bei in einem Zwischenbunker zwischengespeicherten Streugut, das zudem mit das Streugut rückstreifenden Egalisierwalzen vergleichmäßigt wird, ist die Verweilzeit eines Teiles des Streuguts aber unbestimmt. Es kann nicht ausgeschlossen werden, daß Streugutteile aufgrund des Rückstreifens durch die Egalisierwalzen bis hin zum Abbinden im Zwischenbunker umlaufen.

Aus der DE-B-12 30 203 sind eine gattungsgemäße Vorrichtung und ein gattungsgemäßes Verfahren zur kontinuierlichen Bildung einer gleichförmigen Schicht von Streugut bekannt, bei dem das Streugut zunächst aus Vorratsbehältern durch schwenkbare Schurren in jeweils einen Rahmen gebracht wird. Zwischen den Schurren und den eigentlichen Streuvorrichtungen sind zur Vorbereitung des Streugutes für den Streuvorgang Abwurfbänder mit Dosierraupe oder Kratzband bzw. Dosierwalze und Abreißwalzen vorgesehen. Abtastvorrichtungen können die Füllung der Räume unter dem Kratzband oder der Dosierwalze feststellen.

Der Erfindung liegt die Aufgabe zugrunde, ein Verfahren zur kontinuierlichen Bildung einer gleichförmigen Schicht von Streugut anzugeben, bei dem alle Teile des Streugutes ohne Klassiereffekt gleich schnell einer Verarbeitung zugeführt sind, sowie eine Vorrichtung zur Durchführung dieses Verfahrens vorzuschlagen.

Diese Aufgabe wird nach den Merkmalen des Anspruchs 1 gelöst. Der ankommende Massestrom wird in in Laufrichtung aneinander anschließende Massestreifen abgelegt, wobei die Ablagegeschwindigkeit der Massestreifen und die Laufgeschwindigkeit des Zwischenmassestromes so aufeinander abgestimmt werden, daß der Zwischenmassestrom während einer Ablageperiode eine Breite B oder einen ganzzahligen Bruchteil der Breite B eines Massestreifens zurücklegt. Insbesondere werden die Massestreifen in Laufrichtung einander überlappend, vorzugsweise zickzackförmig, abgelegt. Durch die streifenweise Ablage des Massestroms quer zur Zuführungsrichtung zur Streuvorrichtung wird eine Vergleichmäßigungerzielt, die ohne weitere Maßnahmen eine weitgehend gleichmäßige Schichtdicke der auf das Formband aufgestreuten Streugutmatte gewährleistet. Da eine Zwischenbunkerung nicht erfolgt, werden alle Teile des Streugutes fortlaufend mit gleichen Durchlaufzeiten verarbeitet, so daß mit dem erfindungsgemäßen Verfahren auch äußerst kritische, schnell abbindende Mischungen an Streugut sicher verarbeitet werden können.

Ferner ist vorteilhaft, daß mit dem erfindungsgemäßen Verfahren lediglich eine einzige präzise Dosierung der einzelnen Komponenten der Streugutmischung notwendig ist; so können durch mehrfache Dosierung auftretende Aufschaukelungen von Dosierschwankungen und auch beobachtete Entmischungen sicher vermieden werden.

Das erfindungsgemäße Verfahren ist insbesondere bei gipshaltigen Mischungen vorteilhaft; es ergeben sich mit ihm aber auch Vorteile bei der Herstellung von Holzspanplatten, bei Zement-Span-Mischungen für die Herstellung von Holzzementplatten und auch bei Perlite-Mineralfasern und Bitumenmischungen für die Herstellung von Leichtisolierplatten und anderes. Eine auch selbständig zur Vergleichmäßigung eines Massestroms vorgesehene Weiterbildung ist die Anordnung von in Laufrichtung des Bandes umlaufenden Wurfwalzen, deren Umfangsgeschwindigkeit vorteilhaft ein Mehrfaches der Bandgeschwindigkeit ist.

Eine vorteilhafte Vorrichtung zur Durchführung des erfindungsgemäßen Verfahrens ist in Anspruch 6 angegeben. Die Andordnung eines einfachen Fallschachtes - der zweckmäßigerweise Einbauten zur Zentrierung und/oder Beeinflussung der Fallgeschwindigkeit des durchfallenden Streugutes aufweist - ist eine robuste, leicht steuerbare Maßnahme zu der erforderlichen Ablage des Massestroms in Streifen. Die besondere Gestalt des Fallschachtes gewährleistet einen störungsfreien Betrieb unter Vergleichmäßigung des Massestroms.

Weitere Merkmale der Erfindung ergeben sich aus den weiteren Ansprüchen sowie der Beschreibung des in den Zeichnungen dargestellten und nachfolgend im einzelnen beschriebenen Ausführungsbeispiels. Es zeigen:
- Fig. 1: eine Stirnansicht auf die schematisch dargestellte erfindungsgemäße Vorrichtung,
- Fig. 2: eine Teildraufsicht auf die Vorrichtung nach Fig.1.

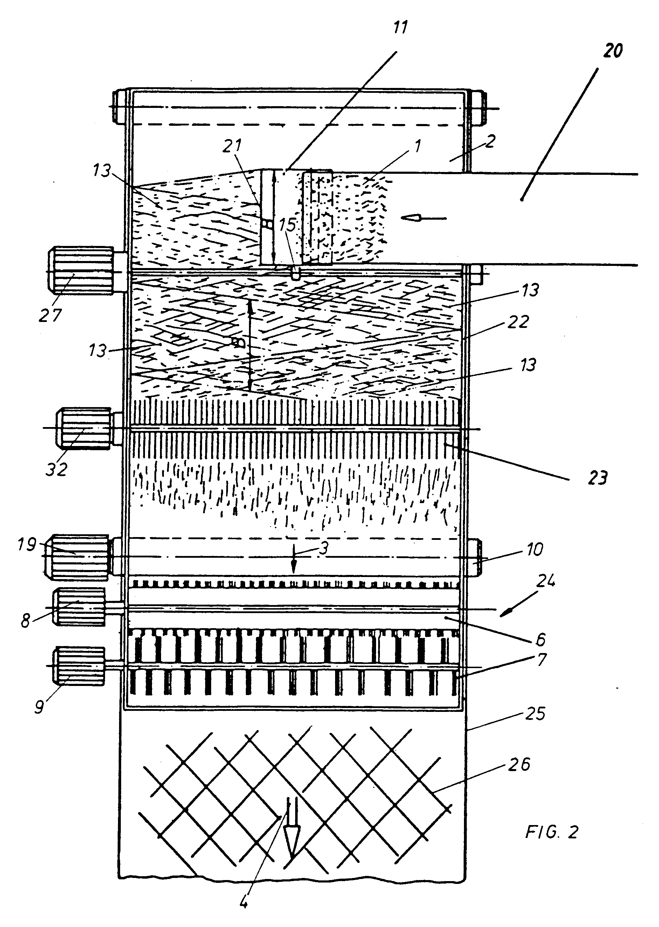

Die erfindungsgemäße Vorrichtung besteht im wesentlichen aus einem ersten Transportband 20, dessen Massestrom 1 einer Streuvorrichtung 24 zugeführt ist, die oberhalb eines Formbandes 25 angeordnet ist. Das Transportband 20 liegt - wie aus Fig. 2 ersichtlich - vorteilhaft rechtwinklig zum Formband 25; es kann zweckmäßig sein, von dem rechten Winkel abzuweichen. Die Streuvorrichtung 24 hat eine der Breite des Formbandes 25 etwa entsprechende Breite.

Am Ende des Transportbandes 20 liegt unterhalb dessen Umlenkrolle 31 ein Fallschacht 21, der in der gezeigten Stellung lotrecht zum Formband 25 steht. Die Einfüllöffnung 11 des Fallschachtes 21 hat etwa rechteckigen Querschnitt, wobei die größere Seitenlänge W geringfügig größer als die Breite des Transportbandes 20 ist.

Es kann zweckmäßig sein, den ankommenden Massestrom 1 in einen schmaleren Streifenmassestrom umzuformen. Dies kann vor dem Auflegen auf das Transportband 20 erfolgen oder beim Ablegen auf ein Zwischentransportband 22, wozu vorteilhaft die quer zum Zwischentransportband 22 gemessene Breite der Mündung 12 des Fallschachtes 21 kleiner als die Breite des Massestroms 1 bzw. die Breite des ersten Transportbandes 20 ist.

In Draufsicht (Fig. 2) liegt das vordere Ende des Transportbandes 20 bzw. desssen vordere Umlenkrolle 31 etwa in Mitte der kürzeren Seitenlänge der rechteckigen Einfüllöffnung 11.

Der Fallschacht 21 ist oberhalb des oberen Trumms 2 des endlos umlaufenden Zwischentransportbandes 22 schwenkbar angeordnet, wobei die Schwenkachse 10 parallel zur Laufrichtung 3 bzw. 4 des Zwischentransportbandes 22 bzw. des Formbandes 25 orientiert ist. Der Fallschacht 21 läuft quer zur Laufrichtung 3 des Zwischentransportbandes 22 konisch zu, so daß seine Mündung 12 - die knapp oberhalb des oberen Trumms 2 des Zwischentransportbandes 22 liegt - ebenso wie die Einfüllöffnung 11 rechteckigen Querschnitt hat aber quer zur Laufrichtung des Zwischentransportbandes 22 schmaler als die Einfüllöffnung 11 ist.

Die Höhe der Schwenkachse C über dem Zwischentransportband 22 entspricht mindestens der 1,5-fachen Streubreite des Zwischentransportbandes.

Im gezeigten Ausführungsbeispiel ist unterhalb der Schwenkachse C ein Antrieb 27 für eine Hin- und Herbewegung des Fallschachtes 21 quer zum Zwischentransportband 22 angeordnet. Der Antrieb ist ein Linearantrieb; im gezeigten Ausführungsbeispiel ist quer zum Zwischentransportband 22 eine Gewindespindel 14 angeordnet, die von einem Motor in Abhängigkeit von den Steuersignalen eines Rechners 28 in Drehrichtung und Drehgeschwindigkeit änderbar gedreht wird. Der Fallschacht 21 ist über eine auf der Gewindespindel 14 laufende Mutter 15 mit dieser verbunden, wobei die Mutter 15 bzw. ein an ihr befestigter Bolzen 16 in einem parallel zur Längsachse 5 des Fallschachtes 21 angeordneten Längsschlitz 17 läuft.

Das Zwischentransportband 22 ist zwischen der Streuvorrichtung 24 und dem Fallschacht 21 angeordnet. Das über den Fallschacht 21 auf das Zwischentransportband 22 abgelegte Streugut wird an der vorderen Umlenkrolle 10 des Zwischentransportbandes 22 in die Streuvorrichtung 24 abgeworfen. Das Zwischentransportband 22 liegt oberhalb des Formbandes 25 und hat etwa dessen Breite. Die Streuvorrichtung 24 liegt mit Höhenabstand zum Formband 25 und tiefer als das Zwischentransportband 22.

Das Formband 25 wird in Laufrichtung 4 von einem Antrieb 18 angetrieben. In gleicher Laufrichtung wird das Zwischentransportband 22 von dem Antrieb 19 getrieben. Die beiden gegeneinander rotierenden Streuwalzen 6, 7 der Streuvorrichtung 24 haben je einen eigenen Antrieb 8, 9.

Die einzelnen Komponenten der zusammengesetzten Streugutmischung werden kontinuierlich, insbesondere gewichtsmäßig aus ihren jeweiligen Vorratsbehältern (nicht dargestellt) dosiert und in einem kontinuierlich arbeitenden Mischer (nicht dargestellt) zusammengeführt. Das gemischte Material tritt als Massestrom aus dem nicht dargestellten Mischer kontinuierlich wie dosiert, aus und fällt auf das Transportband 20.

Durch Wahl einer geeigneten Austragsöffnung und/oder durch andere Maßnahmen kann vorteilhaft erreicht werden, daß der Massestrom 1 auf dem Transportband 20 im Querschnitt annähernd rechteckig bzw. trapezförmig ist.

Der Massestrom 1 wird vom Transportband 20 in den Fallschacht 21 abgeworfen und fällt durch diesen auf das Zwischentransportband 22. Im Fallschacht 21 sind zweckmäßig Einbauten zur Zentrierung und/oder Beeinflussung der Fallgeschwindigkeit des Streugutes des Massestroms 1 angeordnet.

Durch die hin- und hergehende Bewegung des Fallschachtes 21 quer zum Zwischentransportband 22 wird der Massestrom 1 in Massestreifen 13 auf dem Transportband 22 abgelegt. Die nacheinander abgelegten Streifen 13 schließen in Laufrichtung 3 des Zwischentransportbandes 22 lückenlos aneinander an. Hierzu wird die Geschwindigkeit des Zwischentransportbandes 22 und die Pendelfrequenz des Fallschachtes 21 entsprechend aufeinander abgestimmt. Ein lückenloses Aneinanderlegen der Streifen ist dann der Fall, wenn das Zwischentransportband 22 während eines vollständigen Hubs des Fallschachts 21 eine Breite B oder einen ganzzahligen Bruchteil der Breite B des vom Fallschacht abgelegten Massestreifens 13 zurücklegt. Vorzugsweise legt das Zwischentransportband einen ganzzahligen Bruchteil der Breite, z.B. B/2, B/3 oder B 4, während eines Hubs zurück, wobei die Streifen einander überlappend abgelegt werden; zweckmäßig in Draufsicht (Fig. 2) in Zickzackform.

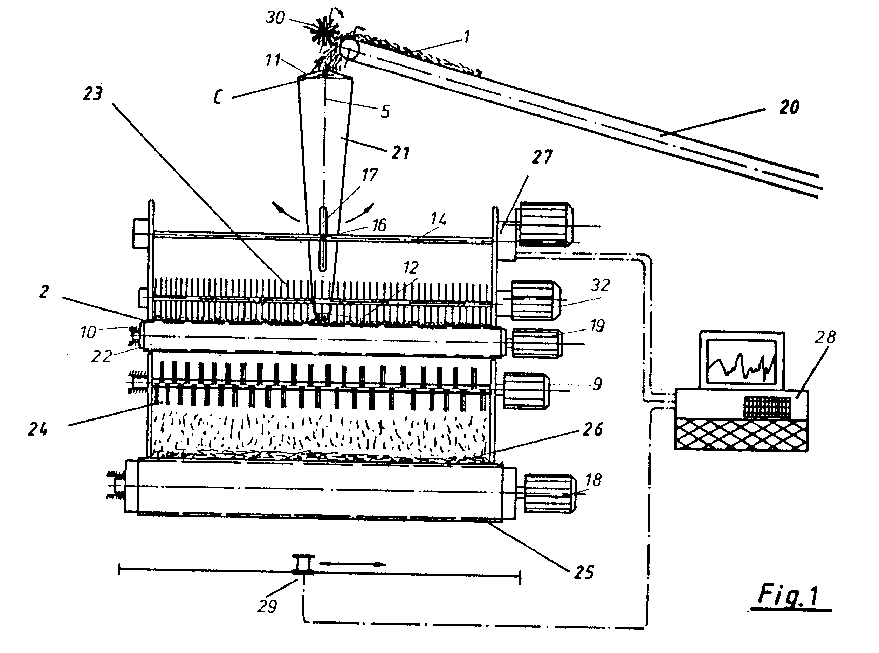

Um eine gleichmäßige Streugutschicht auf dem Formband bzw. gleichmäßig dicke Platten zu erhalten, ist der Antrieb 27 des Fallschachtes 21 von einem Rechner 28 gesteuert, dem als Leitsignal das Ausgangssignal einer dicken Meßeinrichtung 29 (Fig. 1) zugeführt ist, die die Dicke der fertigen Platte am Ende des Formbandes oder die Dicke der Streugutschicht nach der Streuvorrichtung 24 erfaßt.

Aus geometrischen Gründen und wegen bestimmter Randeffekte durch Beschleunigung und Reibung wird selbst bei ideal linearer Schwenkbewegung des Fallschachtes nicht immer eine gleichmäßige Verteilung über die ganze Breite des Zwischentransportbandes 22 erreicht; es stellt sich eine im großen und ganzen symmetrische Verteilung mit Minima und Maxima ein. Die Wellenlänge der Verteilung hängt von der Gesamtgeometrie der Vorrichtung ab, ist aber stets in der Größenordnung von Dezimetern.

Zum Ausgleich dieser Schwankungen wird die Winkelgeschwindigkeit des Fallschachtes 21 bei jedem Hub rechnergesteuert angepaßt, d.h., das quer gemessene Höhenprofil des abgelegten Zwischenmassestroms wird in ein Geschwindigkeitsprofil abgebildet und dabei die oben genannte Randbedingung (Verhältnis von Zwischentransportbandgeschwindigkeit und Hubfrequenz) eingehalten.

Das nach vorstehender Weise auf das Zwischentransportband 22 abgelegte Streugut ist jetzt im Mittel über die Breite des Zwischentransportbandes 22 gleich verteilt; es können jedoch noch kleine Wellen, deren Wellenlänge von der Hubfrequenz des Fallschachtes 21 abhängt, in Laufrichtung 3 auftreten.

Diese Ungleichmäßigkeiten werden weitgehend durch wenigstens eine Wurfwalze 23 ausgeglichen, die das Gut in Laufrichtung 3 des Zwischentransportbandes 22 wirft. Eine derartige Wurfwalze 23 ist vorteilhaft als Flügel-, Stachel- oder Bürstenwalze ausgebildet. Der Antrieb 32 der Wurfwalze 23 ist so vorgesehen, daß deren Umfangsgeschwindigkeit deutlich größer als die Geschwindigkeit des Zwischentransportbandes 22 in dessen Laufrichtung 3 ist. Vorteilhaft ist die Umfangsgeschwindigkeit der Wurfwalze 23 ein Mehrfaches der Geschwindigkeit des Zwischentransportbandes 22. Der Abstand der äußeren Mantellinie der Wurfwalze 23 von der Zwischentransportbandoberfläche ist größenordnungsmäßig auf dem Niveau der tiefsten Täler in dem abgelegten Zwischenmassestrom. Die erfindungsgemäße Wurfwalze 23 ist etwa an der Stelle angeordnet, wie die aus dem Stand der Technik (DE-OS 34 39 493, DE-OS 34 04 658) bekannte Egalisierwalze. Ihr Abstand zum Ende des Zwischentransportbandes 22 ist größer als ihre Wurfweite in Laufrichtung 3 des Bandes. Es kann zweckmäßig sein, mehrere Wurfwalzen hintereinander anzuordnen. Ihr Abstand muß dabei der Wurfweite entsprechend angepaßt sein. Die Anordnung von Wurfwalzen dieser Art zur Vergleichmäßigung eines Massestroms kann auch eigenständig (ohne Fallschacht) vorteilhaft sein.

Es kann zweckmäßig sein, am Ende des Transportbandes 20 zur Vergleichmäßigung des Massestroms 1 eine Wurfwalze 30 anzuordnen, deren Drehrichtung der Transportrichtung des Massestroms 1 entspricht. Die Umfangsgeschwindigkeit der Wurfwalze 30 ist dabei größer als die Transportgeschwindigkeit des Massestroms 1.

Werden zur Bildung einer Platte mehrere Schichten von Streugut übereinandergestreut, wird die Geschwindigkeit der Zuführung des Streugutes von einem gemeinsamen Mischer aus so gesteuert, daß das Alter der Mischung jeder Schicht, dort wo sie zusammenlaufen, gleich groß ist. Damit verhindert man unterschiedliche Reaktionszeiten und gegebenenfalls Verformungen des Endproduktes, z.B. einer Platte.

Das erfindungsgemäße Verfahren bzw. die zur Durchführung des Verfahrens vorgesehene Vorrichtung ist insbesondere für gipshaltige Streugutmischungen verwendbar; es ist aber auch vorteilhaft für andere Streugüter, wie Späne für Holzspanplatten, Wafers oder Strands für OSW, Zement - Span-Mischungen für Holzzementplatten, Perlite, Mineralfasern und Bitumenmischungen für Leichtisolierplatten und andere verwendbar.

## Patentansprüche

1. Verfahren zur kontinuierlichen Bildung einer gleichförmigen Schicht (26) von Streugut, wobei
das in einem etwa gleichförmigen Massestrom (1) ankommende Streugut,
zu mindestens einem Zwischenmassestrom umgebildet, jeweils einer Streuvorrichtung (24) zugeführt und
unter Bildung der gleichförmigen Schicht (26) auf ein kontinuierlich laufendes Formband (25) abgelegt wird,
dadurch gekennzeichnet, daß
der ankommende Massestrom (1) quer zur Laufrichtung (3) des Zwischenmassenstromes in Massestreifen (13), die in Laufrichtung (3) des Zwischenmassestromes aneinander anschließen, abgelegt wird,
wobei die Ablagegeschwindigkeit der Massestreifen (13) und die Laufgeschwindigkeit des Zwischenmassestromes so aufeinander abgestimmt werden, daß der Zwischenmassestrom während einer Ablageperiode eine Breite B oder einen ganzzahligen Bruchteil der Breite B eines Massestreifens (13) zurücklegt.

2. Verfahren nach Anspruch 1, dadurch gekennzeichnet, daß die Ablagegeschwindigkeit in Abhängigkeit vom einem quer zur Laufrichtung (3) aus Messungen der Schichtdicke bzw. Massenverteilung ermittelten Höhenprofil des abgelegten Zwischenmassestromes gesteuert wird.

3. Verfahren nach Anspruch 1 oder 2, dadurch gekennzeichnet, daß der Zwischenmassestrom durch mindestens eine in dessen Laufrichtung (3) umlaufende Wurfwalze (23) geglättet wird.

4. Verfahren nach einem der Ansprüche 1 bis 3, dadurch gekennzeichnet, daß die Wurfwalze (23) mit deutlich höhererer Umfangsgeschwindigkeit als die Geschwindigkeit des Zwischenmassestromes umläuft.

5. Verfahren nach einem der Ansprüch 1 bis 4, dadurch gekennzeichnet, daß die Massestreifen schmal sind.

6. Vorrichtung zur Durchführung des Verfahrens nach einem der Ansprüche 1 bis 5
mit einem ersten Transportband (20) für den ankommenden Massestrom (1),
mit einem Zwischentransportband (22) für den Zwischenmassenstrom,
mit einem Formband (2) für die zu bildende gleichförmige Schicht,
mit einem am Ende des ersten Transportbandes (20) angeordneten Fallschacht (21), der einen Antrieb (27) zur Hin- und Herbewegung quer über dem Zwischentransportband (22) aufweist, und
mit einer Streuvorrichtung (24) am Ende des Zwischentransportbandes (22) oberhalb des Formbandes (2), wobei Zwischentransportband (22), Streuvorrichtung (24) und Formband (2) gleich breit sind,
dadurch gekennzeichnet, daß
eine Mündung (12) des Fallschachtes (21) knapp oberhalb des Zwischentransportbandes (22) angeordnet ist und einen rechteckigen Querschnitt aufweist, wobei die Längsachse des Rechteckes in Laufrichtung (3) des Zwischentransportbandes (22) angordnet ist.

7. Vorrichtung nach Anspruch 6, dadurch gekennzeichnet, daß der Antrieb (27) des Fallschachtes (21) ein Linearantrieb ist.

8. Vorrichtung nach Anspruch 6 oder 7, dadurch gekennzeichnet, daß der Fallschacht (21) quer zur Laufrichtung des Zwischentransportbandes (22) konisch zuläuft.

9. Vorrichtung nach einem der Ansprüche 6 bis 8, dadurch gekennzeichnet, daß der der Fallschacht (21) eine parallel zur Laufrichtung des Zwischentransportbandes (22) angeordnete Schwenkachse (C) aufweist, deren Höhe über dem Zwischentransportbandes (22) mindestens dem 1,5-fachen der Streubreite des Zwischentransportbandes (22) entspricht.

10. Vorrichtung nach einem der Ansprüche 6 bis 9, gekennzeichnet durch einen Rechner (28), der zur Steuerung am Antrieb (27) angeschlossen ist und dessen Eingänge mit Meßeinrichtungen (29) für die Schichtdicke bzw. Massenverteilung verbunden sind.

11. Vorrichtung nach einem der Ansprüche 6 bis 10, dadurch gekennzeichnet, daß oberhalb des Zwischentransportbandes (22) vor der Streuvorrichtung (24) mindestens eine, insbesondere als Flügel-, Stachel- oder Bürstenwalze ausgebildete, Wurfwalze (23) zum Glätten des Zwischenmassestromes angeordnet ist.

12. Vorrichtung nach Anspruch 11, dadurch gekennzeichnet, daß eine äußere Mantelfläche der Wurfwalze (23) etwa auf dem Niveau der tiefsten Täler des Zwischenmassestromes liegt.

13. Vorrichtung nach einem der Ansprüche 6 bis 13, dadurch gekennzeichnet, daß im Fallschacht (21) Einbauten zur Zentrierung des Streugutes angeordnet sind.

14. Vorrichtung nach einem der Ansprüche 6 bis 13, dadurch gekennzeichnet, daß im Fallschacht (21) Einbauten zur Beeinflussung der Fallgeschwindigkeit des Streugutes angeordnet sind.

## Claims

1. Method for continuously forming a uniform layer (26) of loose material, the loose material arriving in an approximately uniform mass flow (1) being converted to at least one intermediate mass flow, supplied respectively to a spreading device (24) and with the formation of the uniform layer (26) being deposited on a continuously travelling forming belt (25), characterised in that the arriving mass flow (1) is deposited transversely to the direction of travel (3) of the intermediate mass flow in mass strips (13), which adjoin each other in the direction of travel (3) of the intermediate mass flow, the depositing speed of the mass strips (13) and the travelling speed of the intermediate mass flow being coordinated with each other so that during one depositing period, the intermediate mass flow covers a width B or an integral fraction of the width B of a mass strip (13).

2. Method according to Claim 1, characterised in that the depositing speed is controlled depending on a vertical profile of the deposited intermediate mass flow ascertained transversely to the direction of travel (3) from measurements of the layer thickness or mass distribution.

3. Method according to Claim 1 or 2, characterised in that the intermediate mass flow is smoothed by at least one spreading roller (23) rotating in its direction of travel (3).

4. Method according to one of Claims 1 to 3, characterised in that the spreading roller (23) rotates at a clearly higher peripheral speed than the speed of the intermediate mass flow.

5. Method according to one of Claims 1 to 4, characterised in that the mass strips are narrow.

6. Apparatus for carrying out the method according to one of Claims 1 to 5, with a first conveyor belt (20) for the arriving mass flow (1), with an intermediate conveyor belt (22) for the intermediate mass flow, with a forming belt (2) for the uniform layer to be formed, with a chute (21) located at the end of the first conveyor belt (20), which chute comprises a drive (27) for a reciprocating movement transversely above the intermediate conveyor belt (22) and with a spreading device (24) at the end of the intermediate conveyor belt (22) above the forming belt (2), the intermediate conveyor belt (22), spreading device (24) and forming belt (2) being of the same width, characterised in that an opening (12) of the chute (21) is located close above the intermediate conveyor belt (22) and has a rectangular cross-section, the longitudinal axis of the rectangle being arranged in the direction of travel (3) of the intermediate conveyor belt (22).

7. Apparatus according to Claim 6, characterised in that the drive (27) of the chute (21) is a linear drive.

8. Apparatus according to Claim 6 or 7, characterised in that the chute (21) tapers conically transversely to the direction of travel of the intermediate conveyor belt (22).

9. Apparatus according to one of Claims 6 to 8, characterised in that the chute (21) has a swivel axis (C) arranged parallel to the direction of travel of the intermediate conveyor belt (22), whereof the height above the intermediate conveyor belt (22) corresponds at least to 1.5 times the spreading width of the intermediate conveyor belt (22).

10. Apparatus according to one of Claims 6 to 9, characterised by a computer (28), which for the purpose of control is connected to the drive (27) and whereof the inputs are connected to measuring devices (29) for the thickness of the layer or the mass distribution.

11. Apparatus according to one of Claims 6 to 10, characterised in that located above the intermediate conveyor belt (22), in front of the spreading device (24), is at least one spreading roller (23) constructed in particular as a vaned, spiked or brush roller, for smoothing the intermediate mass flow.

12. Apparatus according to Claim 11, characterised in that an outer surface of the spreading roller (23) lies approximately at the level of the lowest troughs of the intermediate mass flow.

13. Apparatus according to one of Claims 6 to 13, characterised in that located in the chute (21) are components for centering the loose material.

14. Apparatus according to one of Claims 6 to 13, characterised in that located in the chute (21) are components for influencing the falling speed of the loose material.

## Revendications

1. Procédé de déposition continue d'une couche uniforme (26) d'un matériau à répandre, le matériau à répandre arrivant sous la forme d'un flux massique (1) sensiblement homogène étant transformé en au moins un flux massique intermédiaire, amené respectivement à un dispositif d'épandage (24) et déposé, avec formation d'une couche uniforme (26), sur un ruban de moulage (25) qui tourne en continu, **caractérisé en ce** que le flux massique (1) arrivant est déposé transversalement à la direction de déplacement (3) du flux massique intermédiaire, sous la forme de bandes de matériau (13) qui se raccordent dans la direction de déplacement (3) du flux massique intermédiaire, la vitesse de déposition des bandes de matériau (13) et la vitesse de déplacement du flux massique intermédiaire étant adaptées l'une à l'autre de telle façon que, pendant une période de déposition, le flux massique intermédiaire parcourt une largeur B ou une fraction entière de la largeur B d'une bande de matériau (13).

2. Procédé selon la revendication 1, caractérisé en ce que la vitesse de déposition est commandée en fonction d'un profil vertical du flux massique intermédiaire déposé déterminé transversalement par rapport à la direction de déplacement (3) à partir de mesures de l'épaisseur de couche et respectivement de la distribution des matériaux.

3. Procédé selon l'une des revendications 1 ou 2, caractérisé en ce que le flux massique intermédiaire est lissé par au moins un cylindre de projection (23) tournant dans la direction de déplacement (3) dudit flux massique intermédiaire.

4. Procédé selon l'une des revendications 1 à 3, caractérisé en ce que le cylindre de projection (23) tourne à une vitesse périphérique nettement plus grande que la vitesse du flux massique intermédiaire.

5. Procédé selon l'une des revendications 1 à 4, caractérisé en ce que les bandes de matériau sont étroites.

6. Dispositif pour la mise en oeuvre du procédé selon l'une des revendications 1 à 5, comprenant une première bande transporteuse (20) pour le flux massique (1) arrivant, une bande transporteuse intermédiaire (22) pour le flux massique intermédiaire, un ruban de moulage (2) pour la couche uniforme à réaliser, un tuyau de descente (21) installé à l'extrémité de la première bande transporteuse (20) et équipé d'un mécanisme d'entraînement (27) pour le mouvement de va-et-vient transversalement au-dessus de ladite bande transporteuse intermédiaire (22), et un dispositif d'épandage (24) à l'extrémité de la bande transporteuse intermédiaire (22), au-dessus du ruban de moulage (2), la bande transporteuse intermédiaire (22), le dispositif d'épandage (24) et le ruban de moulage (2) présentant la même largeur, **caractérisé en ce** qu'une ouverture (12) du tuyau de descente (21) est située juste au-dessus de la bande transporteuse intermédiaire (22) et présente une section transversale rectangulaire, l'axe longitudinal du rectangle étant orienté dans la direction de déplacement (3) de la bande transporteuse intermédiaire (22).

7. Dispositif selon la revendication 6, caractérisé en ce que le mécanisme d'entraînement (27) du tuyau de descente (21) est un système d'entraînement linéaire.

8. Dispositif selon l'une des revendications 6 ou 7, caractérisé en ce que le tuyau de descente (21) se rétrécit de manière conique transversalement par rapport à la direction de déplacement de la bande transporteuse intermédiaire (22).

9. Dispositif selon l'une des revendications 6 à 8, caractérisé en ce que le tuyau de descente (21) présente un axe de pivotement (C) orienté parallèlement à la direction de déplacement de la bande transporteuse intermédiaire (22), dont la hauteur au-dessus de ladite bande transporteuse intermédiaire (22) correspond au moins à 1,5 fois la largeur de dispersion de ladite bande transporteuse intermédiaire (22).

10. Dispositif selon l'une des revendications 6 à 9, caractérisé en ce qu'il comprend un ordinateur (28) qui est connecté pour la commande du mécanisme d'entraînement (27) et dont les entrées sont reliées à des dispositifs de mesure (29) pour la mesure de l'épaisseur de couche et respectivement de la distribution des matériaux.

11. Dispositif selon l'une des revendications 6 à 10, caractérisé en ce qu'au-dessus de la bande transporteuse intermédiaire (22) est installé, en amont du dispositif d'épandage (24), au moins un cylindre de projection (23) conformé notamment en cylindre à ailettes, à picots ou à brosse, pour lisser le flux massique intermédiaire.

12. Dispositif selon la revendication 11, caractérisé en ce qu'une génératrice extérieure du cylindre de projection (23) se situe sensiblement au niveau des creux les plus profonds du flux massique intermédiaire.

13. Dispositif selon l'une des revendications 6 à 13, caractérisé en ce que dans le tuyau de descente (21) sont disposées des chicanes pour le centrage du matériau à répandre.

14. Dispositif selon l'une des revendications 6 à 13, caractérisé en ce que dans le tuyau de descente (21) sont disposées des chicanes pour agir sur la vitesse de chute du matériau à répandre.
